# EUROPÄISCHE PATENTSCHRIFT

(11) **EP 3 818 591 B1**
(45) Veröffentlichungstag und Bekanntmachung des Hinweises auf die Patenterteilung: **16.10.2024**
(21) Anmeldenummer: 19752081.0
(22) Anmeldetag: 03.07.2019
(51) Int. Cl.: H01Q 1/36, H01Q 9/04, G01L 1/18

(54) **HVBRID-NANOVERBUNDSTOFF, SENSOR MIT EINEM HVBRID-NANOVERBUNDSTOFF UND VERFAHREN ZU DESSEN HERSTELLUNG**
HYBRID NANOCOMPOSITE MATERIAL, SENSOR COMPRISING A HYBRID NANOCOMPOSITE MATERIAL, AND METHOD FOR PRODUCING SAME
NANOCOMPOSITE HYBRIDE, CAPTEUR POURVU D'UN NANOCOMPOSITE HYBRIDE ET PROCÉDÉ POUR SA FABRICATION

(30) Priorität: 04.07.2018 DE 102018116141
(43) Veröffentlichungstag der Anmeldung: 12.05.2021
(73) Patentinhaber: Technische Universität Chemnitz, 09111 Chemnitz (DE)
(72) Erfinder: BENCHIROUF, Abderrahmane, 85764 Oberschleissheim (DE); KANOUN, Olfa, 09112 Chemnitz (DE)
(74) Vertreter: Rumrich, Gabriele
(86) Internationale Anmeldenummer: PCT/DE2019/100623
(87) Internationale Veröffentlichungsnummer: WO 2020/007417

(56) Entgegenhaltungen:
- ABDERRAHMANE BENCHIROUF ET AL: "Flexible Strain Sensor based Microstrip Patch Antenna Smart Battery Management based on Fast Impedance Spectroscopy View project Electrode design optimisation for enhanced pressure sensitivity View project Flexible Strain Sensor based Microstrip Patch Antenna", 15TH INTERNATIONAL SYMPOSIUM ON MICROWAVE AND OPTICAL TECHNOLOGY (ISMOT 2015), 1 July 2015 (2015-07-01), Dresden, Germany, pages 1 - 4, XP055634101, Retrieved from the Internet <URL:https://www.researchgate.net/profile/Abdulkadir_Sanli/publication/282242694_Flexible_Strain_Sensor_based_Microstrip_Patch_Antenna/links/584a87d808aedf2b6e98dad0/Flexible-Strain-Sensor-based-Microstrip-Patch-Antenna.pdf> [retrieved on 20191021]
- ANONYMOUS: "Leitfähige Polymere - Wikipedia", 20 July 2022 (2022-07-20), pages 1 - 5, XP055944496, Retrieved from the Internet <URL:https://de.wikipedia.org/wiki/Leitfähige_Polymere> [retrieved on 20220720]
- ZHIMENG YU ET AL: "PEDOT:PSS Films with Metallic Conductivity through a Treatment with Common Organic Solutions of Organic Salts and Their Application as a Transparent Electrode of Polymer Solar Cells", APPLIED MATERIALS & INTERFACES, vol. 8, no. 18, 11 May 2016 (2016-05-11), US, pages 11629 - 11638, XP055396715, ISSN: 1944-8244, DOI: 10.1021/acsami.6b00317
- ANONYMOUS: "Polyanilin - Wikipedia", 20 July 2022 (2022-07-20), pages 1 - 4, XP055944497, Retrieved from the Internet <URL:https://de.wikipedia.org/wiki/Polyanilin> [retrieved on 20220720]
- BENCHIROUF A ET AL: "The piezoresistive performance investigation of multifunctional genuine nanocomposites thin films", 2015 IEEE 12TH INTERNATIONAL MULTI-CONFERENCE ON SYSTEMS, SIGNALS & DEVICES (SSD15), IEEE, 16 March 2015 (2015-03-16), pages 1 - 4, XP032825346, DOI: 10.1109/SSD.2015.7348240
- ABDERRAHMANE BENCHIROUF ET AL: "Flexible Strain Sensor based Microstrip Patch Antenna", 15TH INTERNATIONAL SYMPOSIUM ON MICROWAVE AND OPTICAL TECHNOLOGY (ISMOT 2015), 1 July 2015 (2015-07-01), Dresden, Germany, pages 1 - 4, XP055634104, Retrieved from the Internet <URL:https://www.researchgate.net/profile/Abdulkadir_Sanli/publication/282242694_Flexible_Strain_Sensor_based_Microstrip_Patch_Antenna/links/584a87d808aedf2b6e98dad0/Flexible-Strain-Sensor-based-Microstrip-Patch-Antenna.pdf> [retrieved on 20191021]
- CHIN YONG NEO ET AL: "Graphene oxide/multi-walled carbon nanotube nanocomposites as the gelator of gel electrolytes for quasi-solid state dye-sensitized solar cells", JOURNAL OF MATERIALS CHEMISTRY A, vol. 2, no. 24, 1 January 2014 (2014-01-01), GB, pages 9226, XP055634241, ISSN: 2050-7488, DOI: 10.1039/c4ta00232f

## Beschreibung

Die Erfindung betrifft einen Sensor mit einem Hybrid-Nanoverbundstoff, ein Verfahren zu dessen Herstellung und ein Verfahren zur Belastungserfassung und findet insbesondere für die Dehnungsmessung sowie zur Belastungs- und Risserkennung an Bauteilen Anwendung.

Beispielsweise Microstrip-Patchantennen mit einer Metallfläche als Resonator werden üblicherweise für die drahtlose Kommunikation, beispielsweise Mobiltelefone, DECT-Schnurlostelefone und WLAN eingesetzt. Zudem wurde der Einsatzbereich der Antennen als Sensorelement, insbesondere als Dehnungssensor, als Umweltsensor, als Mediensensor oder zur Risserkennung in Materialien und Bauelementen ergänzt. Insbesondere auf Mikrostreifen-Patchantennen basierende metallische Resonatorvorrichtungen wurden bisher bereits zur drahtlosen Kommunikation verwendet. Ihre Verwendung als Erfassungselemente, insbesondere als Belastungssensor und zur Risserkennung, wurde jedoch erst vor kurzem entdeckt.

Die Druckschrift US 8 868 355 B2 offenbart eine Vorrichtung und ein Verfahren zum Überwachen des Zustands einer Struktur, wobei ein passiver drahtloser Antennensensor Anwendung findet, der in einem an der Struktur befestigten Zustand eine bekannte Resonanzfrequenz aufweist. Verfahrensgemäß werden Radiofrequenzsignale mit einer um die Resonanzfrequenz schwankenden Frequenz an die Antenne übertragen.

Der drahtlose Antennensensor weist ein dielektrisches Substrat auf, das zwischen einem Antennenmuster und einer Masseebene angeordnet ist, so dass eine Änderung des Zustands der Struktur eine Änderung einer oder mehrerer Eigenschaften des passiven drahtlosen Sensors bewirkt.

Ein Signal wird von dem passiven drahtlosen Antennensensor empfangen und eine Resonanzfrequenz des passiven drahtlosen Antennensensors wird basierend auf dem empfangenen Signal bestimmt. Die ermittelte Resonanzfrequenz wird folglich mit der bekannten Resonanzfrequenz verglichen, wobei eine Änderung der Resonanzfrequenz eine Änderung des Zustands der Struktur anzeigt.

Es werden Dehnungs-, Temperatur-, umgebende Medien, Riss- und Ermüdungsmessungen an den Strukturen durchgeführt, wobei eine Änderung der Strukturbedingungen zu einer Änderung der Resonanzfrequenz der Antenne führt.

In der Druckschrift US 8 594 961 B2 wird eine Überwachungsvorrichtung zum Bestimmen des Zustands einer Struktur unter Verwendung einer passiven drahtlosen Antenne offenbart. Die Überwachungseinrichtung ist eine Weiterentwicklung des Patentes US 8 868 355 B2, wobei die Einrichtung in einen Schaltkreis integriert wird, der mit einer Fotozelle verbunden ist. Die Signale werden gesammelt, indem die Antenne mit Laserlicht bestrahlt wird, mittels dessen zwischen verschiedenen Zuständen umschaltbar ist.

Die Druckschrift JP 2002109489 beschreibt Verfahren zur Herstellung von Antennen für die kontaktlose Datenübertragung und Kommunikation. Die beschriebene Antenne wird mittels eines Druckverfahrens durch eine leitfähige Paste hergestellt, wobei Paste ein Kohlenstoff-Nanoröhren, ein leitendes Pulver und ein Bindemittelharz als wesentliche Bestandteile auf einem Substrat als Patchmaterial umfasst.

Die Druckschrift KR20090105991 betrifft die Verbesserung der Charakteristiken einer Patchantenne unter Verwendung von Kohlenstoff-Nanoröhren und Harz auf Nylonbasis als Strahler (Patch) im Bereich der Kommunikation.

Eine weitere Patchantenne wird in der Druckschrift WO2015/067229 A1 beansprucht, wobei die Patchantenne als organischer Dampfsensor Anwendung findet. Die Patchantenne besteht aus einer dünnen Folie in Form einer funktionellen Sensorschicht, die aus einem zufällig angeordneten Netzwerk aus, auf ein dielektrisches Substrat aufgetragenen, Kohlenstoff-Nanoröhren besteht. Bei Änderung der Dampfkonzentration des zu überwachenden Mediums kann eine Verschiebung der Resonanzfrequenz beobachtet werden.

In der Druckschrift US 0 2005 011 686 A1 wird eine Antenne geringer Größe offenbart. Die Antenne weist eine einzelne Nanoröhre als Strahler auf, die als Monopolantenne für eine Kommunikationsvorrichtung dient, die im Hochfrequenzbereich arbeitet.

Weitere gattungsgemäße Antennen sind aus den Druckschriften US 7,006,044 B2, US 7,006,044 B2, US 2017/0315037 A9 und US 2013, 0293429 A1 bekannt.

Während bisher eine drahtlose Belastungserfassung unter Verwendung einer Patchantenne unter Verwendung lediglich einer metallischen Patchantenne erforscht wurde, wobei jedoch die Empfindlichkeit weiterhin ein Problem darstellt, das ihre Verwendung in realen Anwendungen verhindert, wurde zudem der Umsetzung des Nanoverbundstoffs für drahtlose Belastungserfassung zu wenig Aufmerksamkeit gewidmet. Der Grund hierfür liegt in der geringen Leitfähigkeit der Nanoverbundstoffe, die dafür die Antennencharakteristik grundlegend verändern werden.

In: CHIN YONG NEO ET AL. "Graphene oxide/multi-walled carbon nanotube nanocomposites as the gelator of gel electrolytes for quasi-solid state dye-sensitized solar cells" JOURNAL OF MATERIALS CHEMISTRY, GB, Vol. 2, No. 24, 01January2014 (2014-01-01), page 9226 DOI: 10.1039/c4ta00232f ISSN: 2050-7488, XP055634241 page 9229 - right column werden Kohlenstoffnanoröhrchen-Nanokomposite als Gelbildner von Gelelektrolyten für farbstoffsensibilisierte Quasi-Festkörpersolarzellen offenbart.

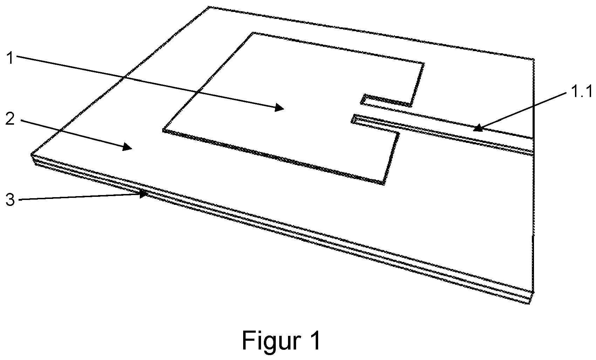

Eine Mikrostreifen-Patchantenne mit einem Metall Patch wird beschrieben in: Abderrahmane Benchirouf ET AL. "Flexible Strain Sensor based Microstrip Patch Antenna" 15th International Symposium on Microwave and Optical Technology ( ISMOT 2015), Dresden, Germany, 01 July 2015 (2015-07-01), pages 1-4, Retrieved from the Internet: https ://www .researchgate.neUprofile/ Abdulkadir_Sa nli/publication/282242694_Flexible_Strain_Sensor_based_Microstrip_Patch_Antenna/link s/584a87d808aedf2b6e98dad0/Flexible-Strain-Sensor-based-Microstrip-Patch-Antenna.pdf [retrieved on 2019-10-21] XP055634104 sections II., VI.; figures 1,4 Die Verwendung eines tertiäreren Hybrid-Nanoverbundstoffs aus einem Polymer mit hoher intrinsischer Leitfähigkeit, Kohlenstoff-Nanoröhren und Graphenoxid auch als Sensorschicht einer Antenne, insbesondere einer Mikrostreifen-Patchantenne ist darin nicht offenbart.

Aus BENCHIROUF A ET AL. "The piezoresistive performance investigation of multifunctional genuine nanocomposites thin films" 2015 IEEE 12TH INTERNATIONAL MULTI-CONFERENCE ON SYSTEMS, SIGNALS & DEVICES (SSD15), IEEE, 16 March 2015 (2015-03-16), pages 1-4 DOI: 10.I 109/SSD.2015.7348240 XP032825346 ist ein tertiärer Hybrid-Nanoverbundstoff bekannt.

Es wird in dieser Druckschrift angedeutet, worauf die zukünftige Entwicklung abzielen soll. Dies ist die Entwicklung eines Sensors mit hoher Leitfähigkeit und Empfindlichkeit und die Erforschung der mechanischen und elektrischen Eigenschaften neuartiger Dreikomponenten-Nanokomposite aus Kohlenstoffnanoröhren, Graphenoxid und PEDOT:PSS (intrinsisch leitfähigen Polymer). Dass dieser Sensor Form einer Antenne ausgebildet sein könnte und eine Sensorschicht aus einem tertiären Hybrid-Nanoverbundstoff aus einem Polymer mit hoher intrinsischer Leitfähigkeit, Kohlenstoff-Nanoröhren und Graphenoxid aufweist, ist aus dieser Veröffentlichung nicht entnehmbar.

Aufgabe der Erfindung ist es, einen Sensor mit einem Hybrid-Nanoverbundstoff sowie ein Verfahren zu dessen Herstellung und ein Verfahren zur Belastungserfassung zu entwickeln, wobei der Sensor geringe Abmessungen und einen einfachen konstruktiven Aufbau aufweist und wobei eine hohe Genauigkeit beispielsweise bei Belastungsänderungen erkennbar ist, wobei insbesondere eine Antenne geringer Größe bereitzustellen ist, die im Hochfrequenzbereich eine hervorragende Ansprechcharakteristik aufweist, und eine Kommunikationsvorrichtung bereitzustellen, welche eine Antenne beinhaltet, die eine so hervorragende Ansprechcharakteristik aufweist, dass eine Verkleinerung der Vorrichtung insgesamt ermöglicht wird und dabei die für einen Belastungssensor erforderliche Empfindlichkeit gewährleistet wird.

Diese Aufgabe wird mit den Merkmalen des ersten, zweiten, neunten und zehnten Patentanspruchs gelöst.

Vorteilhafte Ausgestaltungen ergeben sich aus den Unteransprüchen.Der erfindungsgemäße Sensor mit einem Hybrid-Nanoverbundstoff weist eine Sensorschicht auf, die aus einem tertiären Hybrid-Nanoverbundstoff gebildet ist, wobei der Hybrid-Nanoverbundstoff aus einem Polymer mit hoher intrinsischer Leitfähigkeit, Kohlenstoff-Nanoröhren und Graphenoxid besteht und wobei der Sensor in Form einer Meander-Antenne ausgeführt ist.

Eine weitere Variante eines erfindungsgemäßen Sensor mit einem Hybrid-Nanoverbundstoff, weist eine Sensorschicht auf, die aus einem tertiären Hybrid-Nanoverbundstoff gebildet ist, wobei der Hybrid-Nanoverbundstoff aus einem Polymer mit hoher intrinsischer Leitfähigkeit, Kohlenstoff-Nanoröhren und Graphenoxid besteht und der Sensor in Form einer Mikrostreifen-Patchantenne mit einer Streifenleitung ausgeführt ist, wobei der Sensor eine Grundplatte mit einem darauf angeordneten dielektrischen Substrat aufweist und wobei auf dem dielektrischen Substrat eine Sensorschicht aufgebracht ist, die aus dem tertiären Hybrid-Nanoverbundstoff besteht, wobei die Grundplatte eine Kupfergrundplatte ist, die die Rückseite des dielektrischen Substrats vollständig bedeckt.

Der Hybrid-Nanoverbundstoff besteht aus drei Nanomaterialien in Form eines Polymers mit hoher intrinsischer Leitfähigkeit, Kohlenstoff-Nanoröhren und Graphenoxid. Überraschender Weise wurde festgestellt, dass dieser Verbund hochleifähig ist.

Insbesondere sind die Kohlenstoff-Nanoröhren als mehrwandige oder einwandige Kohlenstoff-Nanoröhren ausgebildet.

Der Hybrid-Nanoverbundstoff weist dabei eine mit Metallen vergleichbare Leitfähigkeit und eine hohe Empfindlichkeit auf, die eine Messbarkeit der Belastung auf unterschiedliche Umgebungen, Strukturen oder eingebettete Systeme gewährleistet.

Erfindungsgemäß ist der Hybrid-Nanoverbundstoff als eine Sensorschicht eines Sensors ausgebildet.

Der erfindungsgemäße Sensor weist eine Sensorschicht auf, die aus einem tertiären Hybrid-Nanoverbundstoff gebildet ist, wobei der Hybrid-Nanoverbundstoff aus einem Polymer mit hoher intrinsischer Leitfähigkeit, Kohlenstoff-Nanoröhren, Graphenoxid.

Es kann auch weitere additive und Nanomaterialien für die gezielte Beeinflussung deren Eigenschaften beinhalten.

Überraschender Weise wurde festgestellt, dass die Zusammensetzung der Sensorschicht eine sehr gute Leitfähigkeit aufweist.

Der Sensor weist vorzugsweise eine Grundplatte mit einem darauf angeordneten dielektrischen Substrat auf. Auf dem dielektrischen Substrat ist die Sensorschicht aufgebracht.

Ein Sensor, der beispielsweise zur Belastungserfassung dient, ist in Form eines kabellosen passiven Sensors zur Messung beispielsweise des Dehnungsverhaltens eines Bauteils und zur Erfassung von einwirkenden Belastungen auf ein Bauteil ausgebildet.

Mit dem erfindungsgemäßen Sensor ist auch die Erfassung anderer Messgrößen der auf die Antenne einwirkenden Belastungen möglich, die zu einer Veränderung der Leitfähigkeit führen, wie z. B. Temperatur, Feuchte, Gase oder Ionen in Gasen oder wässrigen Lösungen.

Dies könnte z. B. durch eine Veränderung der Abstände zwischen den Nanopartikeln (z. B. durch Nanodots, Nanodrähte) durch Aktivierungsenergien für die Ladungsträger oder durch chemische Reaktionen stattfinden.

Bevorzugt ist der Sensor in Form einer Mikrostreifen-Patchantenne mit einer Streifenleitung ausgebildet. Andere Antennen-Strukturen sind prinzipiell möglich.

Das Substrat besteht aus einem Material, welches in einer Mikrowellenfrequenz oder einem Mikrowellenfrequenzbereich und über einen breiten Temperaturbereich sehr stabil ist, wobei das Substrat einen dünnen metallischen Untergrund in Form der Grundplatte aufweist und mit einer Hybrid-Nanokompositschicht versehen ist, welche die Sensorschicht und bildet, die auch als eine Signalschicht fungiert und hochleitfähig ist.

Der Hybrid-Nanoverbundstoff ist in Form einer Beschichtung auf das dielektrische Substrat aufgebracht.

In einer vorteilhaften Ausgestaltung ist der Hybrid-Nanoverbundstoff in Abhängigkeit der benötigten Empfindlichkeit in seiner Form anpassbar derart, dass er in Form einer dünnen oder dicken alleinstehenden Folie oder einer beliebigen festen Form auftragbar ist.

Die Sensorschicht ist in Form eines Patches oder einer anderweitigen beliebigen Form ausgebildet ist.

Die Kohlenstoff-Nanoröhren weisen einen Durchmesser von 6-9 nm und eine Länge von weniger als 1µm auf, wobei die wässrige Dispersion des Graphenoxids 0,5 Gew.-% bei mindestens 60 % einer Atomschicht und einer Kolbengröße von 0,5-5 µm beträgt.

Der Sensor weist einen integrierten Schaltkreis zur selbstständigen Abfrage von Daten/Messwerten auf.

Es besteht die Möglichkeiten zum Addieren von anderen Nanopartikeln bzw.

Nanofilerpartikeln (z. B. Nanodots und/oder Nanodrähte) in die Sensorschicht. Somit kann die Sensorschicht auch mehr als die drei vorgenannten genannten Materialien beinhalten.

Zusätzlich zu dem Polymer, den Kohlenstoff-Nanoröhren und dem Graphenoxid können in der Sensorschicht auch weitere metallische, isolierende bzw. halbleitende Nanodots, Nanodrähte, Enzyme oder Aptamere einzeln oder in Kombinationen enthalten sein.

Diese weiteren Nanofilerpartikel können für die weitere Erhöhung der Sensitivität gegenüber der Messgröße oder zur Reduzierung der Querempfindlichkeiten gegenüber Umweltbedingungen notwendig sein.

Die Formen der Antenne kann beispielsweise als Meander-Antenne oder als Rechteck ausgeführt sein. Durch die unterschiedlichen Dimensionen in einem Rechteck, ergeben sich zwei Resonanzfrequenzen, die gemessen werden können.

Wenn eine Messgröße sich in beiden Richtungen gleich auswirkt, können die dadurch gewonnene Zusatzinformation zur Reduzierung der Messunsicherheit genutzt werden.

Wenn eine Messgröße in beiden Richtungen unterschiedlich wirkt, wie z. B. bei der Dehnung, dann ist die Dehnung in beiden Richtungen mit einem einzigen Sensor messbar. So wird der Sensor Multifunktional.

Durch teilweise verdeckte Strukturen bzw. Bereiche der Antennenflächen kann dieser Effekt für die multifunktionalen Messungen auch für die Differenzierung von richtungsunabhängigen Größen, wie z. B. Gase oder Ionen genutzt werden.

Das Verfahren zur Herstellung eines drahtlosen passiven Sensors ist dadurch gekennzeichnet, dass in einem ersten Verfahrensschritt Kohlenstoffnanoröhren mit Graphenoxid mittels Ultraschallbehandlung zu einer Suspension verbunden werden, wobei folgend die Suspension mit einem intrinsisch leitfähigen Polymer vermischt wird und anschließend als eine Sensorschicht auf ein Substrat aufgebracht wird.

Das Verfahren zur Belastungserfassung mittels eines drahtlosen passiven Sensors in einem Bauteil, insbesondere zur Erfassung von Dehnungsverhalten, wobei der Sensor eine Sensorschicht aufweist, ist dadurch gekennzeichnet, dass die Sensorschicht Belastungen durch Änderung der Resonanzfrequenz erfasst und an einen Empfänger direkt überträgt, wobei die Sensorschicht als Erfassungsschicht für die Erfassung der Belastung als auch zur Informationsübertragung verwendet wird.

Die vorliegende Erfindung verbindet einen neuartigen tertiären Nanoverbundstoff als Sensorschicht insbesondere zur Belastungs- und Temperaturerfassung mit in Bezug auf Metalle vergleichbaren Leitfähigkeit und einer hohen Empfindlichkeit. Die Sensorschicht kann verwendet werden, um vorrangig auf unterschiedliche Umgebungen, Strukturen oder eingebettete Systeme wirkende Belastungen zu messen. Somit kann mithilfe dieser Phänomene die Verschiebung der Resonanzfrequenz aufgrund der Änderung der Belastung bestimmt werden. Die vorliegende Erfindung stellt eine hohe Empfindlichkeit von etwa 4 MHz/µε bereit.

Bei der vorgesehenen Erfindung handelt es sich somit insbesondere um eine Patchantenne, bevorzugt mit Zufuhreinsatz, die mit einem neuartigen tertiären Hybrid-Nanoverbundstoff auf ein sehr verlustarmes Substratmaterial aufgetragen wird, das eine metallische Grundplatte für hochempfindliche Belastungsmessung aufweist. Die vorliegende Erfindung könnte sowohl zur herkömmlichen als auch zur passiven drahtlosen Belastungserfassung zum Überwachen des strukturellen Zustands, für medizinische Anwendungen oder für eine beliebige andere Anwendung angewendet werden.

Wenn der tertiäre Nanoverbundstoff direkt auf ein flexibles Substrat oder ein beliebiges anderes Substrat aufgetragen wird, kann er zur herkömmlichen Belastungserfassung verwendet werden (d.h. er beinhaltet Drähte). Wenn er dagegen als Antenne auf ein dielektrisches Material aufgetragen wird, kann er zur drahtlosen Erfassung verwendet werden.

Die erfindungsgemäße Lösung stellt erstmalig eine, in ein tertiäres Hybrid-Nanoverbundstoff-Material integrierte, höchstempfindliche Mikrowellenantenne bereit, welche zur Messung von Belastungen von Bauteilen einsetzbar ist.

Weiterhin wird mit der erfindungsgemäßen Lösung eine Antenne geringer Größe bereitgestellt, die im Hochfrequenzbereich eine hervorragende Ansprechcharakteristik aufweist. Weiterhin wird eine Kommunikationsvorrichtung zur Verfügung gestellt, welche eine Antenne beinhaltet, die eine so hervorragende Ansprechcharakteristik aufweist, dass eine Verkleinerung der Vorrichtung insgesamt ermöglicht wird.

Das heißt, die vorliegende Erfindung ist auf eine Antenne ausgerichtet, die dadurch gekennzeichnet ist, dass sie einen Strahler beinhaltet, der als rechteckige Antenne aus einem intrinsisch leitfähigen Polymer, einer Kohlenstoffnanoröhre und Graphenoxid hergestellt ist und sowohl als Kommunikationsvorrichtung als auch als hochempfindlicher Belastungssensor fungiert.

Grundsätzlich verbindet die vorliegende Erfindung einen neuartigen tertiären Nanoverbundstoff als Erfassungsschicht zur Belastungs- und Temperaturerfassung mit einer Metallen vergleichbaren Leitfähigkeit und einer hohen Empfindlichkeit, die verwendet werden kann, um vorrangig die Belastung auf unterschiedliche Umgebungen, Strukturen oder eingebettete Systeme zu messen. Somit kann mithilfe dieser Phänomene die Verschiebung der Resonanzfrequenz aufgrund der Änderung der Belastung bestimmt werden. Die vorliegende Erfindung stellt eine hohe Empfindlichkeit von etwa 4 MHz/µε bereit.

Die Erfindung wird nachfolgend an einem Ausführungsbeispiel und zugehörigen Zeichnungen näher erläutert.

Es zeigen:
Fig. 1: Veranschaulichung der Mikrostreifen-Patchantenne für passive drahtlose Belastungsmessung.

In Figur 1 ist der schematische Aufbau des Sensors zur Belastungsbefassung in Form einer Microstrip-Patchantenne dargestellt. Die Microstrip-Patchantenne weist eine Sensorschicht 1 auf, die aus einem tertiären Hybrid-Nanoverbundstoff gebildet ist. Der Hybrid-Nanoverbundstoff ist derart aufgebaut, dass er aus einem Polymer mit hoher intrinsischer Leitfähigkeit, Kohlenstoff-Nanoröhren und Graphenoxid besteht, der mittels eines Beschichtungsverfahrens auf ein dielektrisches Substrat aufgetragen wird. Das dielektrische Substrat ist vollständig von einer Grundplatte 3 aus Kupfer bedeckt. Das dielektrische Substrat ist in Form eines verlustarmen Laminatsubstratmaterials 2 ausgebildet, das im Frequenzbereich von Mikrowellen und über einen breiten Temperaturbereich sehr stabil ist.

Die Dicke des Substrats 2 aus dielektrischen Materialien beträgt vorzugsweise 500 µm, die der aufgetragenen Sensorschicht 5 µm. Die Sensorschicht 1 weist eine Länge von 13,9 mm und eine Breite von 18,5 mm auf, wobei die Sensorschicht 1 eine daran anschließende Streifenleitung 1.1 aufweist, die bevorzugt 1 mm breit und hier 11,9mm lang ist.

Die Microstrip-Patchantenne schwingt vorzugsweise mit einer Resonanzfrequenz von 5,6 GHz, wobei eine Änderung der Belastung eine Änderung der Frequenz verursacht. Die Rückseite des dielektrischen Substrats 2 ist vollständig durch eine Kupfergrundplatte 3 mit einer Dicke von beispielsweise 18 µm bedeckt. Vorzugsweise ist die Patchantenne für die Kommunikation mit einem Vektor-Netzwerkanalysator zum Sammeln der Daten verbunden.

Zur Steigerung der Leitfähigkeit der Sensorschicht 1 und zur Verbesserung der Eigenschaften des drahtlosen Sensors, wird die Sensorschicht 1 unter Verwendung einer hohen Säurekonzentration chemisch behandelt.

Im Folgenden wird die Sensorschicht 1 mit destilliertem Wasser gereinigt, um die Rückstände der Säure zu entfernen. Anschließend erfolgt eine Trocknung unter Verwendung von Stickstoffgas.

Für die drahtlose Belastungserfassung wird eine sehr dünne Beschichtung auf die Oberfläche der Sensorschicht 1 aufgetragen. Die Sensorschicht 1 weist vorzugsweise eine Leitfähigkeit von 5×10⁴ S/m auf und ist in der Lage, Änderungen der Resonanzfrequenz bei Aufbringen einer Last zu erkennen. Die Hysterese bei den Messungen ist mit insbesondere weniger als 0,1 % sehr gering.

Ein Vermischen von Lösungen wird verwendet, um diesen neuartigen Nanoverbundstoff herzustellen, und eine physikalische Flüssigkeitsabscheidung wird verwendet, um das dielektrische Antennensubstrat mit dem gewünschten Muster zu beschichten.

In einer Station liegt Graphenoxid noch separat vor. Diesem werden Kohlenstoffnanoröhren beigefügt. Der durch die Kohlenstoffnanoröhren und Graphenoxid gebildete Hybrid-Nanoverbundstoff wird durch Ultraschallbehandlung mit einer Sonotrode vermischt. Das Mischen erfolgt in einer weiteren Station.

Die dadurch hergestellte Dispersion wird in einer Zentrifuge zentrifugiert, wodurch eine homogene Dispersion mit einer Sedimentschicht gebildet wird. Anschließend wird die Suspension mit dem Polymer mit hoher intrinsischer Leitfähigkeit vermischt und auf das Patch-Substrat aufgetragen.

Nach dem Aufbringen auf das Patch-Substrat findet ein chemischer Reduktionsprozess statt, um die elektrischen Eigenschaften der Erfassungsschicht zu verbessern.

Es wird dadurch eine Mikrostreifen-Patchantenne mit Zufuhreinsatz geschaffen, die in drahtlosen Belastungserfassungsanwendungen verwendet wird. Anstatt einen Metall-Patch zu verwenden, wie es bisher üblich war, wurde erfindungsgemäß ein völlig neuartiger tertiärer Hybrid-Nanoverbundstoff geschaffen, der sowohl als Erfassungsschicht als auch zur Informations-übertragung verwendet wird.

Die in Figur 1 dargestellte Antenne besteht erstmalig aus einem sehr verlustarmen Laminatsubstratmaterial, das im Mikrowellenfrequenzbereich und über einen weiten Bereich von Temperaturen sehr stabil ist. Das Substrat weist eine dünne metallische Grundplatte 3 auf und ist mit einer hochleitfähigen Hybrid-Nanoverbundstoffschicht versehen, die zur Kommunikation (Empfangen und Senden) des Signals und als Erfassungsschicht für Belastung dient.

Der tertiäre Hybrid-Nanoverbundstoff besteht aus mindestens drei unterschiedlichen Materialien und zwar einem Polymer mit hoher intrinsischer Leitfähigkeit, Kohlenstoffnanoröhren und Graphenoxid.

Der Sensor ist insbesondere in Form eines kabellosen (drahtlosen) passiven Sensors ausgeführt.

Der Sensor dient zur Erfassung von einwirkenden Belastungen auf ein Bauteil. Die kann beispielsweise das Dehnungsverhaltens eines Bauteils sein aber auch andere Belastungen, deren Messgrößen, die zu einer Veränderung der Leitfähigkeit der Sensorschicht führen, wie z. B. Temperatur, Feuchte, Gase, Ionen in Gasen oder wässrige Lösungen.

### Bezugszeichenliste

- 1: Sensorschicht
- 1.1: Streifenleitung
- 2: Dielektrisches Substrat
- 3: Grundplatte

## Patentansprüche

1. Sensor mit einem Hybrid-Nanoverbundstoff, wobei dieser eine Sensorschicht (1) aufweist, die aus einem tertiären Hybrid-Nanoverbundstoff gebildet ist, wobei der Hybrid-Nanoverbundstoff aus einem Polymer mit hoher intrinsischer Leitfähigkeit, Kohlenstoff-Nanoröhren und Graphenoxid besteht, wobei der Sensor in Form einer Meander-Antenne ausgeführt ist.

2. Sensor mit einem Hybrid-Nanoverbundstoff, wobei dieser eine Sensorschicht aufweist, die aus einem tertiären Hybrid-Nanoverbundstoff gebildet ist, wobei der Hybrid-Nanoverbundstoff aus einem Polymer mit hoher intrinsischer Leitfähigkeit, Kohlenstoff-Nanoröhren und Graphenoxid besteht, wobei der Sensor in Form einer Mikrostreifen-Patchantenne mit einer Streifenleitung ausgeführt ist, wobei der Sensor eine Grundplatte (3) mit einem darauf angeordneten dielektrischen Substrat (2) aufweist und wobei auf dem dielektrischen Substrat (2) eine Sensorschicht (1) aufgebracht ist, die aus dem tertiären Hybrid-Nanoverbundstoff besteht, wobei die Grundplatte (3) eine Kupfergrundplatte ist, die die Rückseite des dielektrischen Substrats (2) vollständig bedeckt.

3. Sensor nach Anspruch 1, **dadurch gekennzeichnet, dass** das Substrat (2) aus einem Material besteht, welches in einer Mikrowellenfrequenz oder einem Mikrowellenfrequenzbereich und über einen breiten Temperaturbereich sehr stabil ist, wobei das Substrat (2) einen dünnen metallischen Untergrund in Form der Grundplatte (3) aufweist und mit einer Hybrid-Nanokompositschicht versehen ist, welche die Sensorschicht (1) und bildet, die auch als eine Signalschicht fungiert und hochleitfähig ist.

4. Sensor nach einem der Ansprüche 1 bis 3, **dadurch gekennzeichnet, dass** der Hybrid-Nanoverbundstoff in Form einer Beschichtung auf das dielektrische Substrat aufgebracht ist.

5. Sensor nach einem der Ansprüche 1 bis 4, **dadurch gekennzeichnet, dass** der Hybrid-Nanoverbundstoff in Abhängigkeit der benötigten Empfindlichkeit in seiner Form anpassbar ist derart, dass er in Form einer dünnen oder dicken alleinstehenden Folie oder einer beliebigen festen Form auftragbar ist.

6. Sensor nach einem der Ansprüche 1 bis 5, **dadurch gekennzeichnet, dass** die Sensorschicht (1) in Form eines Patches oder einer anderweitigen beliebigen Form ausgebildet ist.

7. Sensor nach einem der Ansprüche 1 bis 6, **dadurch gekennzeichnet, dass** die Kohlenstoffnanoröhren einen Durchmesser von 6-9 nm und eine Länge von weniger als 1µm aufweisen und die wässrige Dispersion des Graphenoxids 0,5 Gew.-% bei mindestens 60 % einer Atomschicht und einer Kolbengröße von 0,5-5 µm beträgt.

8. Sensor nach einem der Ansprüche 1 bis 7, **dadurch gekennzeichnet, dass** der Sensor einen integrierten Schaltkreis zur selbstständigen Abfrage von Daten/Messwerten aufweist.

9. Verfahren zur Herstellung eines Sensors nach Anspruch 1 oder 2 mit einem Hybrid-Nanoverbundstoff, wobei in einem ersten Verfahrensschritt die Kohlenstoff-Nanoröhren mit dem Graphenoxid mittels Ultraschallbehandlung zu einer Suspension verbunden werden, wobei folgend die Suspension mit dem Polymer mit hoher intrinsischer Leitfähigkeit vermischt wird und anschließend als eine Sensorschicht (1) auf ein Substrat (2) aufgebracht wird.

10. Verfahren zur Belastungserfassung mittels eines drahtlosen passiven Sensors nach Anspruch 1 oder 2 in einem Bauteil, insbesondere zur Erfassung des Dehnungsverhaltens, wobei der Sensor eine Sensorschicht (1) aufweist, wobei die Sensorschicht (1) Belastungen durch Änderung der Resonanzfrequenz erfasst und an einen Empfänger direkt überträgt, wobei die Sensorschicht (1) als Erfassungsschicht für die Erfassung der Belastung als auch zur Informationsübertragung verwendet wird.

## Claims

1. Sensor with a hybrid nanocomposite material, wherein said sensor comprises a sensor layer (1) formed of a tertiary hybrid nanocomposite material, wherein the hybrid nanocomposite material consists of a polymer with high intrinsic conductivity, carbon nanotubes and graphene oxide, wherein the sensor is in the form of a meander antenna.

2. Sensor with a hybrid nanocomposite material, wherein said sensor comprises a sensor layer formed of a tertiary hybrid nanocomposite material, wherein the hybrid nanocomposite material consists of a polymer with high intrinsic conductivity, carbon nanotubes and graphene oxide, wherein the sensor is in the form of a microstrip patch antenna having a stripline, wherein the sensor has a base plate (3) with a dielectric substrate (2) arranged thereon and wherein a sensor layer (1) consisting of the tertiary hybrid nanocomposite is applied to the dielectric substrate (2), wherein the base plate (3) is a copper base plate which completely covers the rear side of the dielectric substrate (2).

3. Sensor according to claim 1, **characterized in that** the substrate (2) is made of a material which is very stable in a microwave frequency or a microwave frequency range and over a wide temperature range, wherein the substrate (2) has a thin metallic base in the form of the base plate (3) and is provided with a hybrid nanocomposite layer which forms the sensor layer (1) and which also functions as a signal layer and is highly conductive.

4. Sensor according to one of claims 1 to 3, **characterized in that** the hybrid nanocomposite is applied to the dielectric substrate in the form of a coating.

5. Sensor according to one of claims 1 to 4, **characterized in that** the hybrid nanocomposite material can be adapted in its shape depending on the required sensitivity in such a way that it can be applied in the form of a thin or thick stand-alone film or any solid form.

6. Sensor according to one of claims 1 to 5, **characterized in that** the sensor layer (1) is in the form of a patch or any other arbitrary shape.

7. Sensor according to one of claims 1 to 6, **characterized in that** the carbon nanotubes have a diameter of 6-9 nm and a length of less than 1 µm and the aqueous dispersion of the graphene oxide is 0.5 wt.% with at least 60% of an atomic layer and a bulb size of 0.5-5 µm.

8. Sensor according to one of claims 1 to 7, **characterized in that** the sensor has an integrated circuit for autonomous retrieval of data/measured values.

9. Method for producing a sensor according to claim 1 or 2 with a hybrid nanocomposite material, wherein in a first method step the carbon nanotubes are combined with the graphene oxide by means of ultrasonic treatment to form a suspension, wherein subsequently the suspension is mixed with the polymer with high intrinsic conductivity and is then applied as a sensor layer (1) to a substrate (2).

10. Method for stress detection by means of a wireless passive sensor according to claim 1 or 2 in a component, in particular for detecting the strain behavior, wherein the sensor has a sensor layer (1), wherein the sensor layer (1) detects stresses by changing the resonant frequency and transmits them directly to a receiver, wherein the sensor layer (1) is used as a detection layer for detecting the stress as well as for transmitting information.

## Revendications

1. Capteur en nanomatériau composite hybride, qui comporte une couche de capteur (1) faite d'un nanomatériau composite hybride tertiaire, lequel nanomatériau composite hybride se compose d'un polymère ayant une conductivité intrinsèque élevée, de nanotubes de carbone et d'oxyde de graphène, le capteur étant réalisé sous la forme d'une antenne à méandres.

2. Capteur en nanomatériau composite hybride, qui comporte une couche de capteur (1) faite d'un nanomatériau composite hybride tertiaire, lequel nanomatériau composite hybride se compose d'un polymère ayant une conductivité intrinsèque élevée, de nanotubes de carbone et d'oxyde de graphène, le capteur étant réalisé sous la forme d'une antenne patch à microruban avec une ligne ruban, le capteur comportant une plaque de base (3) sur laquelle un substrat diélectrique (2) est disposé et une couche de capteur (1) composée du nanomatériau composite hybride tertiaire étant appliquée sur le substrat diélectrique (2), la plaque de base (3) étant une plaque de base en cuivre qui recouvre complètement l'envers du substrat diélectrique (2).

3. Capteur selon la revendication 1, **caractérisé en ce que** le substrat (2) se compose d'un matériau qui est très stable à une fréquence de micro-ondes ou dans une plage de fréquences de micro-ondes et sur une large plage de températures, le substrat (2) comportant un mince support métallique formé par la plaque de base (3) et étant muni d'une couche de nanocomposite hybride de conductivité élevée qui forme le la couche de capteur (1) et sert aussi de couche de signal.

4. Capteur selon l'une des revendications 1 à 3, **caractérisé en ce que** le nanomatériau composite hybride est appliqué sur le substrat diélectrique sous la forme d'un revêtement.

5. Capteur selon l'une des revendications 1 à 4, **caractérisé en ce que** la forme du nanomatériau composite hybride peut être adaptée en fonction de la sensibilité requise par le fait qu'il peut être appliqué sous la forme d'un film séparé fin ou épais ou sous une forme solide quelconque.

6. Capteur selon l'une des revendications 1 à 5, **caractérisé en ce que** la couche de capteur (1) est conçue sous la forme d'un patch ou sous une autre forme quelconque.

7. Capteur selon l'une des revendications 1 à 6, **caractérisé en ce que** les nanotubes de carbone ont un diamètre de 6 à 9 nm et une longueur inférieure à 1 µm et la dispersion aqueuse d'oxyde de graphène représente 0,5 % du poids pour au moins 60 % d'une couche atomique et une taille de poinçon de 0,5 à 5 µm.

8. Capteur selon l'une des revendications 1 à 7, **caractérisé en ce qu'**il comporte un circuit intégré pour la consultation autonome de données/de valeurs de mesure.

9. Procédé pour la fabrication d'un capteur selon la revendication 1 ou 2 avec un nanomatériau composite hybride dans lequel, dans une première étape de procédé, les nanotubes de carbone sont liés à l'oxyde de graphène au moyen d'un traitement par ultrasons donnant une suspension, puis la suspension est mélangée avec le polymère de conductivité intrinsèque élevée et appliquée sous la forme d'une couche de capteur (1) sur un substrat (2).

10. Procédé pour détecter des contraintes dans un composant au moyen d'un capteur passif sans fil selon la revendication 1 ou 2, en particulier pour détecter le comportement d'allongement, dans lequel le capteur comporte une couche de capteur (1), laquelle couche de capteur (1) détecte des contraintes par un changement de la fréquence de résonance et les transmet directement à un récepteur, la couche de capteur (1) qui sert de couche de détection étant utilisée pour détecter la contrainte ainsi que pour transmettre les informations.
